(19) Europäisches Patentamt
European Patent Office
Office européen des brevets

(11) Numéro de publication: **0 289 904 B1**

(12) # FASCICULE DE BREVET EUROPEEN

(45) Date de publication de fascicule du brevet: **29.07.92**

(51) Int. Cl.5: **C01B 15/01**

(21) Numéro de dépôt: **88106610.4**

(22) Date de dépôt: **25.04.88**

(54) **Procédé de production de peroxyde d'hydrogène par photoréduction chimique d'oxygène, et peroxyde d'hydrogène obtenu par ce procédé.**

(30) Priorité: **05.05.87 ES 8701334**

(43) Date de publication de la demande:
**09.11.88 Bulletin 88/45**

(45) Mention de la délivrance du brevet:
**29.07.92 Bulletin 92/31**

(84) Etats contractants désignés:
**AT BE DE ES FR GB IT NL**

(56) Documents cités:

**CHEMICAL ABSTRACTS, vol. 108, no. 4, 25 janvier 1988, page 499, résumé no. 29277e, Columbus, Ohio, US; J.A. NAVARRO et al.: "Hydrogen peroxide photoproduction by the semicarbazide-tris(2,2'-bipyridine)ruthenium(II)-oxygen system", & J. PHOTOCHEM. PHOTOBIOL., A 1987, 40(2-3), 279-93**

**CHEMICAL ABSTRACTS, vol. 98, no. 22, 30 mai 1983, page 175, résumé no. 182531c, Columbus, Ohio, US; M.A. DE LA ROSA et al.: "Stabilization by high pH of hydrogen peroxide production with flavin photosystems", & PHOTOBIOCHEM. PHOTOBIOPHYS, 1983, 5(2), 93-103**

(73) Titulaire: **INTEROX Société Anonyme**
**Rue du Prince Albert, 33**
**B-1050 Bruxelles(BE)**

(72) Inventeur: **de la Rosa, Francisco Fernando Dr.**
**Felipe II, 2, 2 C**
**E-41013 Sevilla(ES)**
Inventeur: **Navarro, José Antonio Dr.**
**Dr. Gonzalez Gramoge, 5, 6 B**
**E-41005 Sevilla(ES)**
Inventeur: **Roncel, Mercedes**
**Martinete, 5**
**Dos Hermanos-Sevilla(ES)**
Inventeur: **de la Rosa, Miguel Angel Dr.**
**Felipe II, 2, 2 D**
**E-41013 Sevilla(ES)**

(74) Mandataire: **Lederer, Franz, Dr. et al**
**Lederer, Keller & Riederer Patentanwälte**
**Lucile-Grahn-Strasse 22**
**W-8000 München 80(DE)**

**EP 0 289 904 B1**

Il est rappelé que: Dans un délai de neuf mois à compter de la date de publication de la mention de la délivrance du brevet européen, toute personne peut faire opposition au brevet européen délivré, auprès de l'Office européen des brevets. L'opposition doit être formée par écrit et motivée. Elle n'est réputée formée qu'après paiement de la taxe d'opposition (art. 99(1) Convention sur le brevet européen).

## Description

La présente invention concerne un procédé de production de peroxyde d'hydrogène par catalyse photochimique de la réduction de l'oxygène moléculaire en milieu aqueux au moyen d'un agent réducteur.

On a déjà produit du peroxyde d'hydrogène par réduction d'oxygène moléculaire au moyen de semicarbazide en milieu aqueux et en présence de lumière visible et d'un catalyseur photochimique (photosensibilisant) appartenant à la classe des flavines (PHOTOBIOCHEMISTRY AND PHOTOBIOPHYSICS, 1983, Amsterdam, M.A. DE LA ROSA, J.A. NAVARRO, F.F. DE LA ROSA et M. LOSADA "Stabilization by high pH of hydrogen peroxide production with flavin photosystems" pages 93 à 103, *pages 101 et 102*).

L'utilisation de flavines comme photosensibilisants présente toutefois le désavantage que celles-ci sont rapidement détruites par la lumière lorsque le pH du milieu n'est pas réglé avec soin pour éviter la zone comprise entre 10 et 12 (*page 97*).

L'invention remédie à ce désavantage du procédé connu en fournissant un procédé nouveau de production de peroxyde d'hydrogène par catalyse photochimique de la réduction de l'oxygène moléculaire en milieu aqueux au moyen de semicarbazide comme réducteur où le photosensibilisant ne subit pas de dégradation photochimique importante avant que le réducteur ait été totalement consommé en milieu alcalin.

A cet effet, l'invention concerne un procédé pour fabriquer du peroxyde d'hydrogène par photoréduction d'oxygène moléculaire en milieux aqueux en présence de lumière visible de semicarbazide agissant comme donneur d'électrons et d'un photosensibilisant, selon lequel on sélectionne le photosensibilisant parmi le rose bengale et le complexe ruthénium II-tris(2,2'-bipyridyle) et on maintient le pH du milieu réactionnel à une valeur supérieure à 9.

Par photoréduction, on entend désigner une réaction d'oxydo-réduction qui nécessite, pour se dérouler, un apport d'énergie sous la forme de photons (énergie lumineuse).

L'oxygène moléculaire mis en oeuvre à titre d'oxydant (accepteur d'électrons), est de l'oxygène à l'état gazeux tel qu'il se présente dans les conditions normales de température et de pression. On peut utiliser de l'oxygène pur ou en mélange avec d'autres gaz inertes. Par gaz inertes, il faut entendre des gaz qui n'interfèrent, ni dans le mécanisme de la réaction photochimique proprement dite, ni sur la stabilité du peroxyde d'hydrogène produit. Un exemple de mélange convenant bien est l'air exempt d'anhydride carbonique. L'oxygène pur est toutefois préféré.

L'oxygène moléculaire peut être introduit dans le milieu réactionnel par toute technique connue en soi permettant de disperser un gaz dans un liquide. On peut, par exemple, faire traverser le milieu réactionnel liquide par un courant d'oxygène gazeux, notamment par barbotage de bulles d'oxygène pur au moyen de tubes distribuant le gaz que l'on plonge dans le milieu réactionnel.

La lumière visible mise en oeuvre est un rayonnement monochromatique ou polychromatique dont la fréquence ou la plage de longueurs d'onde se situe à l'intérieur ou coïncide avec la plage spectrale visible par l'oeil humain (400 à 800 nm). Ce rayonnement peut toutefois contenir des radiations situées dans l'infra-rouge ou l'ultra-violet, pour autant que ces radiations non visibles constituent moins de 50 % de la quantité d'énergie lumineuse totale utilisée.

Des exemples de telles lumières sont la lumière solaire naturelle telle qu'elle nous parvient à travers l'atmosphère terrestre et celles émises par des sources diverses telles que les lasers, les tubes à décharge électrique dans un gaz communément appelés tubes fluorescents, les lampes à filament métallique incandescent, les lampes à halogène, les lampes à vapeur métallique telles que les lampes à vapeur de sodium, les arcs lumineux produits par la vaporisation d'éléments métalliques et la combustion de matières inflammables ou incandescentes.

La semicarbazide est un agent réducteur qui a pour fonction de céder un ou plusieurs électrons dans une réaction d'oxydo-réduction.

Elle répond à la formule chimique suivante :

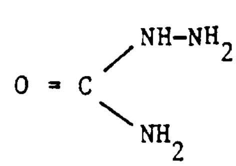

On met en oeuvre la semicarbazide dans le milieu réactionnel en concentrations telles que l'on obtienne des solutions de richesse comprise entre 2 et 50 mM. Le plus souvent, la richesse des solutions

est choisie dans les limites de 5 et 30 mM.

Le terme photosensibilisant désigne un catalyseur photochimique c'est-à-dire un produit capable d'absorber l'énergie lumineuse pour accéder à un état instable excité susceptible de vaincre la barrière énergétique dans une réaction chimique difficile à catalyser par voie purement thermique. Les photosensibilisants sont généralement des matières colorantes ou des produits contenant des groupes chromophores.

Selon l'invention, on sélectionne le photosensibilisant parmi le rose bengale et le complexe ruthénium II-tris(2,2'-bipyridyle). Le rose bengale est un colorant dérivé de la fluorescéine qui est un sel de sodium de la 4,5,6,7-tétrachloro-2',4',5',7'-tétraiodofluorescéine. Le complexe ruthénium II-tris(2,2'-bipyridyle), que l'on désignera ci-après par l'abréviation $Ru(bpy)_3^{2+}$ , est le complexe tri-chélaté du cation métallique $Ru^{++}$ avec le ligand 2,2'-bipyridyle, de formule

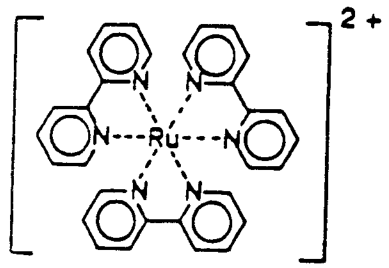

Les quantités de photosensibilisant mises en oeuvre sont généralement comprises entre 2 et 50 µmoles/l. Des quantités comprises entre 4 et 30 µmoles/l conviennent bien.

Selon l'invention, le pH du milieu réactionnel est maintenu à une valeur alcaline supérieure à 9. Avantageusement, on fixe le pH dans la plage de 10 à 14 et, de préférence à une valeur comprise entre 12 et 14. Pour ce faire, on incorpore au milieu réactionnel une quantité réglée d'un agent alcalin qui n'interfère pas dans le mécanisme de la réaction photochimique. Un exemple d'agent alcalin qui convient bien est l'hydroxyde de sodium en solution aqueuse. L'appoint de l'agent alcalin doit être poursuivi pendant le déroulement de la réaction de façon à maintenir le pH du milieu réactionnel à la valeur imposée.

Dans la variante de l'invention qui met en oeuvre le $Ru(bpy)_3^{2+}$ à titre de photosensibilisant, on a démontré le mécanisme suivant :

$$Ru(bpy)_3^{2+} \xrightarrow{h\nu} {}^*Ru(bpy)_3^{2+} \qquad (1)$$

$$^*Ru(bpy)_3^{2+} + O_2 \longrightarrow Ru(bpy)_3^{3+} + O_2^{\overline{\cdot}} \qquad (2)$$

$$2O_2^{\overline{\cdot}} + H^+ \longrightarrow HO_2^- \qquad (3)$$

$$SC + Ru(bpy)_3^{3+} \longrightarrow SC_{oxydé} + Ru(bpy)_3^{2+} \qquad (4)$$

où $h\nu$ symbolise l'apport d'énergie lumineuse;
$^*Ru(bpy)_3^{2+}$ représente le complexe RuII-tris(2,2'bipyridyle) dans son état photoexcité;
$O_2^{\overline{\cdot}}$ représente l'anion superoxyde et
SC symbolise la semicarbazide.

Ce mécanisme repose sur le phénomène du piégeage ("quenching" dans la littérature anglo-saxonne) rapide du complexe photoexcité à courte durée de vie par l'oxygène moléculaire (réaction (2)). Cette réaction de piégeage est ici du type piégeage oxydant où l'on assiste à un transfert rédox d'électron du complexe photoexcité $^*Ru(bpy)_3^{2+}$ vers la molécule d'oxygène qui se réduit en radical superoxyde tandis que le complexe photoexcité s'oxyde en passant à l'étage d'oxydation supérieur. En solution aqueuse, l'anion oxygène singulet donne naissance à du peroxyde d'hydrogène (réaction (3)). Enfin, la semicarbazide participe à une deuxième réaction rédox (réaction (4)) pour réduire le complexe $Ru(bpy)_3^{3+}$ à son étage inférieur par don d'un électron et régénérer ainsi le catalyseur photosensibilisant $Ru(bpy)_3^{2+}$ qui peut alors prendre part à un nouveau cycle.

Avantageusement, on peut immobiliser le complexe $Ru(bpy)_3^{2+}$ dans une matrice polymérique échangeuse d'ions en vue de limiter dans la plus large mesure possible la photodégradation du complexe de ruthénium. Les résines polymériques échangeuses d'ions qui conviennent bien sont, par exemple, les résines appartenant à la classe des perfluorosulfonates, notamment celles connues sous la marque de fabrique NAFION (Du Pont).

Dans l'autre variante de réalisation de l'invention qui utilise le rose bengale comme photosensibilisant, il est généralement avantageux de mettre en oeuvre une concentration de rose bengale proche d'une valeur de saturation au-delà de laquelle le taux de production de peroxyde d'hydrogène n'augmente plus. Plus particulièrement, on préfère utiliser une concentration de rose bengale comprise entre 6 et 10 $\mu$moles/l.

Afin de limiter la photodégradation du rose bengale, il est intéressant de sélectionner la lumière visible parmi les lumières monochromatique ou polychromatiques dont les longueurs d'onde sont comprises entre 500 et 550 nm. On peut, par exemple, avantageusement utiliser un filtre vert dont la transmittance s'approche de 100 % dans la plage de longueur d'onde s'étendant de 500 à 550 nm.

Il est également avantageux pour la préservation de la stabilité du rose bengale, de limiter l'intensité lumineuse à une densité du flux de photons à une valeur inférieure à une valeur dite de saturation au-delà de laquelle le taux de production de peroxyde d'hydrogène n'augmente plus. Dans la plage de lumière verte précitée, cette valeur de saturation se situe environ vers 500 $\mu E.m^{-2}.s^{-1}$. L'unité E employée ici signifie l'Einstein, c'est-à-dire l'energie, exprimée en ergs, de N photons à la longueur d'onde choisie, N étant le nombre d'Avogadro. De préférence, on maintiendra la densité du flux des photons entre 100 et 500 $\mu E.m^{-2}.s^{-1}$.

L'invention concerne aussi, à titre de produit industriel, la solution aqueuse de peroxyde d'hydrogène obtenue par le procédé photochimique conforme à l'invention.

L'invention constitue une application intéressante de conversion de l'énergie lumineuse solaire en énergie chimique.

Les exemples qui suivent illustrent l'invention de manière non limitative, en référence aux dessins annexés qui sont trois diagrammes fournissant la vitesse initiale de production du peroxyde d'hydrogène en fonction de paramètres opératoires.

Exemple 1 (conforme à l'invention).

Dans une cuvette transparente en matière plastique de marque LUCITE et de dimensions 2x5x10 cm on à introduit 50 ml d'une solution 20 mM en semicarbazide, 0,1 mM en $Ru(bpy)_3^{2+}$ et 1 M en NaOH. On a ensuite soumis la cuvette à irradiation au moyen d'un projecteur pour diapositives équipé d'une lampe halogène de 150 W de façon à dispenser une lumière blanche avec un taux énergétique de 200 $W.m^{-2}$.

Au même moment on a fait barboter dans la cuvette un courant d'oxygène gazeux à un débit de 0,3 $l.min^{-1}$ et on a laissé la réaction photochimique se dérouler.

On a ensuite prélevé à des intervalles de temps différents des parties aliquotes du mélange réactionnel et analysé leur teneur en $H_2O_2$ par réduction enzymatique du peroxyde au moyen d'o-dianisidine selon la méthode décrite par A.G. Fontes, F.F. De la Rosa et C. Gómez-Moreno (Photobiochemistry and Photobiophysics, 1981, 2, pages 355 à 364).

On a calculé pour chaque prélèvement la vitesse de formation du peroxyde d'hydrogène que l'on a portée en graphique. Par extrapolation, on a ainsi pu déterminer une vitesse initiale de formation de $H_2O_2$ de 167 $\mu mol.l^{-1}.min^{-1}$.

Exemples 2R à 5R (non conformes à l'invention)

On a reproduit l'exemple 1 constituant le système complet : oxygène/semicarbazide/$Ru(bpy)_3^{2+}$ /lumière mais en omettant dans chaque cas un des éléments du système :

Exemple 2R : on a omis la semicarbazide
Exemple 3R : on a omis le complexe $Ru(bpy)_3^{2+}$
Exemple 4R : on a omis la lumière

Exemple 5R : on a omis l'oxygène.

Dans l'exemple 5R, on a au préalable fait barboter un courant d'azote gazeux dans la cuvette de façon à obtenir une solution exempte d'oxygène dissous.

Les résultats obtenus en ce qui concerne la vitesse initiale de formation de $H_2O_2$ ont été portés au tableau I qui suit.

Tableau I

| Nº exemple | Elément omis dans le système | Vitesse de formation de $H_2O_2$, $\mu mol.1^{-1}.min^{-1}$ |
|---|---|---|
| 2R | semicarbazide | < 10 |
| 3R | $Ru(bpy)_3^{2+}$ | 20 |
| 4R | lumière | 38 |
| 5R | oxygène | < 10 |

On voit donc que la mise en oeuvre du procédé conforme à l'invention (système complet de l'exemple 1) permet d'atteindre des vitesses initiales de l'ordre de 5 à plus de 17 fois supérieures.

Exemples 6R à 11R (non conformes à l'invention) et 12 à 18 (conformes à l'invention)

On a reproduit l'exemple 1 à la différence près que dans les exemples 11R et 12 à 18, la quantité de NaOH a été ajustée pour fixer le pH à des valeurs comprises entre 9 et 14, que dans les exemples 6R à 9R, on a remplacé l'addition de NaOH par une quantité réglée d'acide chlorhydrique pour fixer le pH à des valeurs comprises entre 0 et 6. L'exemple 10R a été effectué sans addition de NaOH ni d'HCl.

Les résultats obtenus en terme de vitesse initiale de formation de $H_2O_2$ sont portés en graphique à la figure 1, où l'échelle des ordonnées exprime la vitesse de formation du peroxyde d'hydrogène en mmoles.$l^{-1}$.$min^{-1}$ et l'échelle des abscisses exprime le pH.

On voit l'intérêt de sélectionner, conformément à l'invention, le pH dans la plage de valeurs supérieures à 9.

Exemple 19 (analyse du mécanisme réactionnel)

Cet exemple a été réalisé en vue d'étudier le mécanisme de la réaction photochimique, et en particulier le phénomène de piégeage ("quenching") des espèces photoexcitées.

Il est basé sur la détermination du spectre des espèces excitées et sur leur cinétique de disparition transitoire au moyen de la technique de photolyse flash au laser.

A cet effet, on a utilisé comme source lumineuse un laser à rubis émettant des impulsions brèves (20 à 30 ns) d'environ 100 mJ d'énergie à une longueur d'onde de 347 nm. De manière synchronisée avec le flash du laser, une lampe au Xe pulsée a produit pendant 500 $\mu s$ une lumière blanche d'intensité constante et a servi de source lumineuse d'analyse pour les mesures de transmission lumineuse du système photochimique. On a de cette façon examiné l'évolution de la transmission pendant un court intervalle de temps après chaque flash d'excitation du laser. Cette évolution a été enregistrée au moyen d'un oscilloscope à mémoire dont le déclenchement était couplé à celui des impulsions de la lumière d'examen fournie par la lampe au Xe. Les courbes temporelles de transmission à des longueurs d'onde caractéristiques ont permis de calculer les constantes cinétiques des réactions de piégeage des espèces excitées.

Afin d'examiner la cinétique de piégeage du complexe excité $^*Ru(bpy)_3^{2+}$ , on a déterminé selon cette méthode l'évolution de la transmission du mélange réactionnel (retour à la décoloration) à une longueur d'onde de 452 nm. On a effectué en parallèle des mesures de l'émission lumineuse transitoire du mélange réactionnel à une longueur d'onde de 610 nm (examen de la diminution temporelle de l'émission transitoire) correspondant au phénomène de luminescence du complexe excité $^*Ru(bpy)_3^{2+}$ .

A cette fin, des solutions de complexe $Ru(bpy)_3^{2+}$ 50 M dans l'eau ou dans une solution 1M en NaOH ont été soumises à la technique de photolyse flash au laser en l'absence ou en présence d'un agent de piégeage ("quencher") de l'espèce excitée $^*Ru(bpy)_3^{2+}$ . A titre de "quencher", on a mis en oeuvre de l'oxygène moléculaire (concentration obtenue : 1,26 mM). Dans un autre essai, on a utilisé de la semicarbazide à titre de "quencher" en concentration 20 mM. Dans ce dernier cas, on s'est assuré de l'absence d'oxygène en pratiquant au préalable un barbotage d'azote gazeux pendant 1 heure à travers le milieu réactionnel.

Les résultats obtenus exprimés sous la forme de constantes cinétiques du ler ordre relatives à la réaction de piégeage ("quenching") du complexe excité $^*Ru(bpy)_3^{2+}$ ont été portés au tableau II

Tableau II

| | Constante cinétique de piégeage (1er ordre), $s^{-1}$ | |
|---|---|---|
| Milieu / "Quencher" | Eau | NaOH 1M |
| néant | $1,4.10^6$ | $1,6.10^6$ |
| oxygène | $5,7.10^6$ | $5,0.10^6$ |
| semicarbazide | $1,5.10^6$ | $1,8.10^6$ |

Il apparaît que la présence de semicarbazide donne lieu à des constantes cinétiques de piégeage qui sont quasi les mêmes que celles obtenues en l'absence de "quencher". Par contre, avec l'oxygène, la constante est de 3 à 4 fois plus élevée qu'en l'absence de "quencher". On en déduit qu'en présence simultanée d'oxygène et de semicarbazide, le piégeage du complexe excité $^*Ru(bpy)_3^{2+}$ est assuré par l'oxygène plutôt que par la semicarbazide.

Par ailleurs, il apparaît aussi que dans le cas de l'oxygène, l'efficacité du piégeage est plus grande en solution aqueuse neutre qu'en solution alcaline.

Exemple 20 (conforme à l'invention)

On a reproduit l'exemple 1 en substituant le rose bengale au complexe $Ru(bpy)_3^{2+}$ .

On a ainsi mesuré une vitesse initiale de formation de $H_2O_2$ de 733 $\mu$mol.$l^{-1}$.$min^{-1}$.

Exemple 21 (conforme à l'invention)

On a mis en oeuvre dans une cuvette semblable à celle utilisée à l'exemple 1, 1 ml d'une solution aqueuse 20 mM en semicarbazide, 0,1 mM en rose bengale et 1 M en NaOH. On a fait barboter de l'oxygène gazeux avec un débit de 25 ml/min et on a simultanément irradié la solution avec une lumière monochromatique à un taux énergétique de 20 $\mu E.m^{-2}.s^{-1}$ au moyen d'une lampe au Xe de 150 W et d'un monochromateur de marque ORIEL.

On a prélevé des parties aliquotes du mélange au cours de la durée de la réaction. On a résumé les mesures de vitesse initiale de formation de $H_2O_2$ au tableau III qui suit où on a fait figurer les productions relatives de peroxyde d'hydrogène moyennes calculées sur 4 plages de longueur d'onde du spectre visible en attribuant la valeur unitaire à la plage du spectre qui a donné lieu aux productions les plus élevées.

Tableau III

| Longueurs d'onde, nm | Production relative de $H_2O_2$ |
|---|---|
| 460 à 505 | 0,58 |
| 505 à 525 | 0,87 |
| 525 à 548 | 1,00 |
| 548 à 600 | 0,45 |

Il apparaît que les longueurs d'onde correspondant à la lumière verte sont les plus efficaces.

Exemple 22 (conforme à l'invention)

Dans une cuvette semblable à celle de l'exemple 1, on a fait barboter de l'oxygène gazeux dans 1 ml d'une solution de NaOH à raison d'un débit de 78 ml/min. pendant 10 min. On a ensuite ajouté sous barbotage d'oxygène 10 µl de solution aqueuse de semicarbazide 0,2 M et un faible volume d'une solution mère de rose bengale.

On a simultanément irradié le mélange avec une lampe au Xe de 150W équipée d'un filtre vert assurant 85 % de transmittance dans la plage de longueur d'onde s'étendant de 510 à 548 nm de façon à réaliser une densité de flux photonique de 1500 $\mu E.m^{-2}.s^{-1}$.

A intervalles réguliers, on a prélevé des parties aliquotes du mélange et on a déterminé la vitesse initiale de formation du peroxyde d'hydrogène.

Les résultats obtenus ont été portés en diagramme à la figure 2, dans laquelle l'échelle des abscisses représente la concentration en rose bengale exprimée en mmoles/l et l'échelle des ordonnées, la vitesse de formation du peroxyde d'hydrogène en $mmoles.l^{-1}.min^{-1}$. Ils montrent l'intérêt de fixer la concentration en rose bengale à une valeur proche de la saturation, en l'occurrence 9 à 10 µM.

Exemple 23 (conforme à l'invention)

On a reproduit l'exemple 22 en fixant la concentration en rose bengale à 8 µM et celle de la semicarbazide à 20 mM et en faisant varier les densités de flux photonique.

Les résultats ont été figurés en graphique au diagramme de la figure 3 dans laquelle l'échelle des abscisses représente la densité du flux photonique, exprimée en $\mu E.m^{-2}.s^{-1}$ et l'échelle des ordonnées, la vitesse de formation du peroxyde d'hydrogène en $mmoles.l^{-1}.min^{-1}$.

On voit ici encore l'intérêt d'adopter pour la densité de flux photonique, une valeur proche de la saturation, qui intervient ici vers 480 $\mu E.m^{-2}.s^{-1}$.

## Revendications

1. Procédé pour fabriquer du peroxyde d'hydrogène par photoréduction d'oxygène moléculaire en milieux aqueux en présence de lumière visible, de semicarbazide et d'un photosensibilisant, caractérisé en ce que l'on sélectionne le photosensibilisant parmi le rose bengale et le complexe ruthénium II-tris(2,2'-bipyridyle) et on maintient le pH du milieu réactionnel à une valeur supérieure à 9.

2. Procédé selon la revendication 1 caractérisé en ce qu'on fixe le pH à une valeur comprise entre 12 et 14.

3. Procédé selon la revendication 1 ou 2, caractérisé en ce qu'on fixe le pH du milieu par addition contrôlée d'hydroxyde de sodium.

4. Procédé selon l'une quelconque des revendications 1 à 3, caractérisé en ce qu'on fait passer un courant d'oxygène gazeux à travers le milieu réactionnel.

5. Procédé selon l'une quelconque des revendications 1 à 4, caractérisé en ce qu'on immobilise le complexe ruthénium II-tris(2,2'-bipyridyle) dans une matrice polymérique échangeuse d'ions appartenant à la classe des perfluorosulfonates.

6. Procédé selon l'une quelconque des revendications 1 à 4, caractérisé en ce qu'on met en oeuvre une concentration de rose bengale comprise entre 6 et 10 µmoles par litre du milieu réactionnel.

7. Procédé selon l'une quelconque des revendications 1 à 4 et 6, caractérisé en ce que, dans le cas d'utilisation du rose bengale comme photosensibilisant, on sélectionne la lumière visible parmi les lumières monochromatique ou polychromatique dont les longueurs d'onde sont comprises entre 500 et 550 nm.

8. Procédé selon l'une quelconque des revendications 1 à 4, 6 et 7, caractérisé en ce qu'on met en oeuvre une radiation monochromatique ayant une intensité lumineuse comprise entre 100 et 500 $\mu E.m^{-2}.s^{-1}$, E étant l'énergie, exprimée en ergs, de N photons à la longueur d'onde choisie, et N étant le nombre d'Avogadro.

## Claims

1. Process for the production of hydrogen peroxyde by photoreduction of molecular oxygen in aqueous mediums in the presence of visible light, semicarbazide and a photosensitizer, characterized in that the photosensitizer is selected among the group consisting of rose bengale and the ruthenium II-tris(2,2'-bipyridyl) complex and that the pH of the reaction medium is maintained at a value greater than 9.

2. Process according to claim 1 characterized in that the pH is fixed at a value between 12 and 14.

3. Process according to claim 1 or 2 characterized in that the pH of the reaction medium is fixed by the controlled addition of sodium hydroxyde.

4. Process according to one of claims 1 to 3 characterized in that a gaseous oxygen stream is passed through the reaction medium.

5. Process according to one of claims 1 to 4 characterized in that the ruthenium II-tris(2,2'-bipyridyl) complex is immobilized in a polymer ion exchange matrix belonging to the class of perfluorosulfonates.

6. Process according to one of claims 1 to 4 characterized in that a concentration of rose bengale between 6 and 10 µmoles per liter reaction medium is used.

7. Process according to one of claims 1 to 4 and 6 characterized in that in the case of using rose bengale as photosensitizer, the visible light is selected among the monochromatic or polychromatic light having a wave length between 500 and 550nm.

8. Process according to one of claims 1 to 4, 6 and 7, characterized in that a monochromatic radiation having a luminous intensity between 100 and 500 $\mu E.m^{-2}.s^{-1}$ is used whereby E is the energy, expressed in ergs, of N photons at the selected wave length and N is the Avogadro number.

**Patentansprüche**

1. Verfahren zur Herstellung von Wasserstoffperoxyd durch Photoreduktion von molekularem Sauerstoff in wässrigen Medien in Anwesenheit von sichtbarem Licht, Semicarbazid und eines Photosensibilisators, dadurch gekennzeichnet, daß man den Photosensibilisator unter Bengalrosa und dem Ruthenium II-tris-(2,2'-bipyridyl)-Komplex auswählt und man den pH des Reaktionsmediums auf einem Wert größer als 9 hält.

2. Verfahren nach Anspruch 1, dadurch gekennzeichnet, daß man den pH auf einen Wert zwischen 12 und 14 festlegt.

3. Verfahren nach Anspruch 1 oder 2, dadurch gekennzeichnet, daß man den pH des Mediums durch kontrolliertes Zufügen von Natriumhydroxyd festlegt.

4. Verfahren nach einem der Ansprüche 1 bis 3, dadurch gekennzeichnet, daß man einen gasförmigen Sauerstoffstrom durch das Reaktionsmedium fließen läßt.

5. Verfahren nach einem der Ansprüche 1 bis 4, dadurch gekennzeichnet, daß man den Ruthenium II-tris-(2,2'-bipyridyl)-Komplex in einer polymeren Ionenaustauschermatrix, die zur Klasse der Perfluorsulfonate gehört, immobilisiert.

6. Verfahren nach einem der Ansprüche 1 bis 4, dadurch gekennzeichnet, daß man eine Konzentration von Bengalrosa zwischen 6 und 10 µMol pro Liter des Reaktionsmediums einsetzt.

7. Verfahren nach einem der Ansprüche 1 bis 4 und 6, dadurch gekennzeichnet, daß man im Falle der Verwendung von Bengalrosa als Photosensibilisator, das sichtbare Licht unter monochromatischem oder polychromatischem Licht auswählt, dessen Wellenlänge zwischen 500 und 550 nm beträgt.

8. Verfahren nach einem der Ansprüche 1 bis 4, 6 und 7, dadurch gekennzeichnet, daß man eine monochromatische Strahlung mit einer Lichtintensität zwischen 100 und 500 $\mu E.m^{-2}.s^{-1}$ einsetzt, wobei

E die Energie, ausgedrückt in Erg, von N Photonen bei der gewählten Wellenlänge ist und N die Avogadrozahl ist.

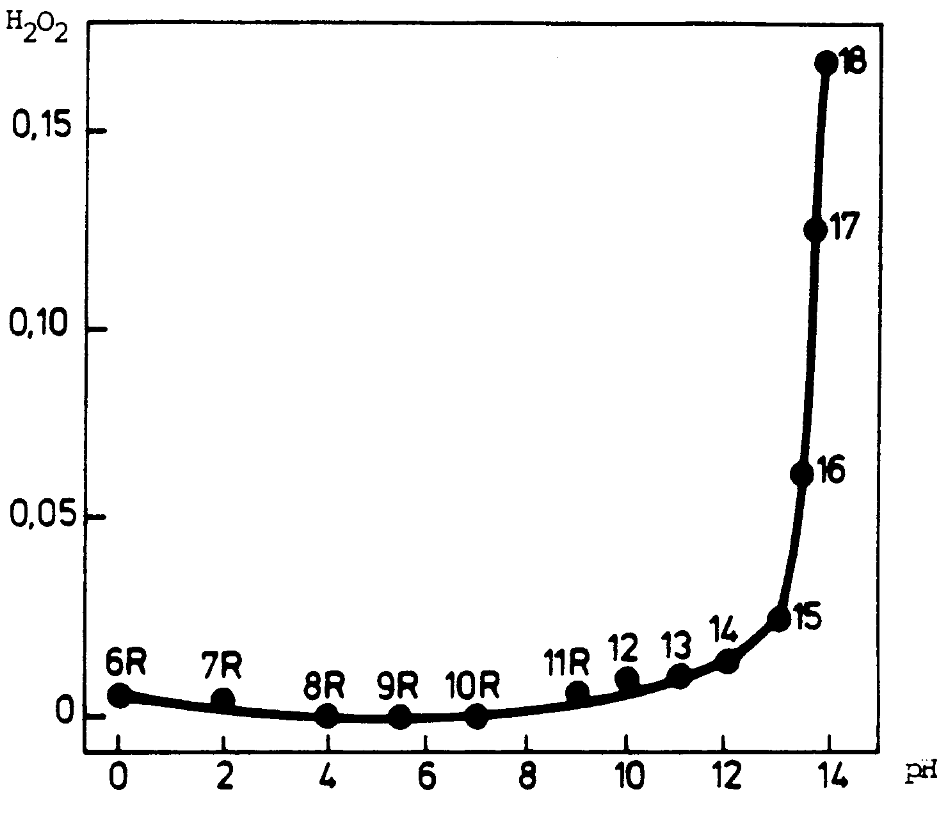

$H_2O_2$
0,15
0,10
0,05
0
6R
7R
8R
9R
10R
11R
12
13
14
15
16
17
18
0
2
4
6
8
10
12
14
pH


FIGURE 1

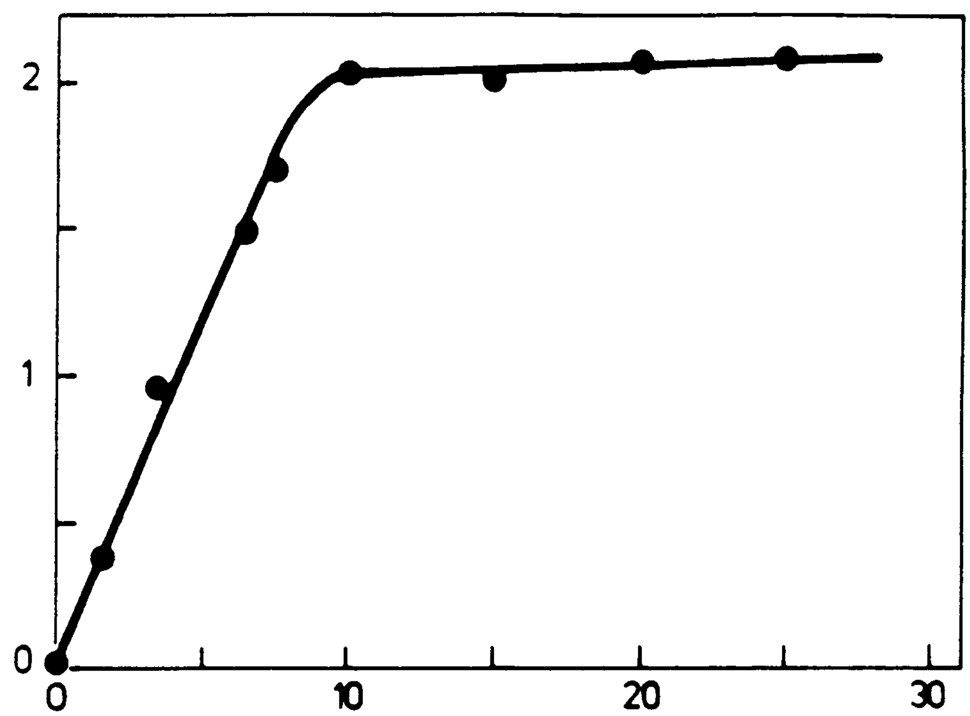


FIGURE 2

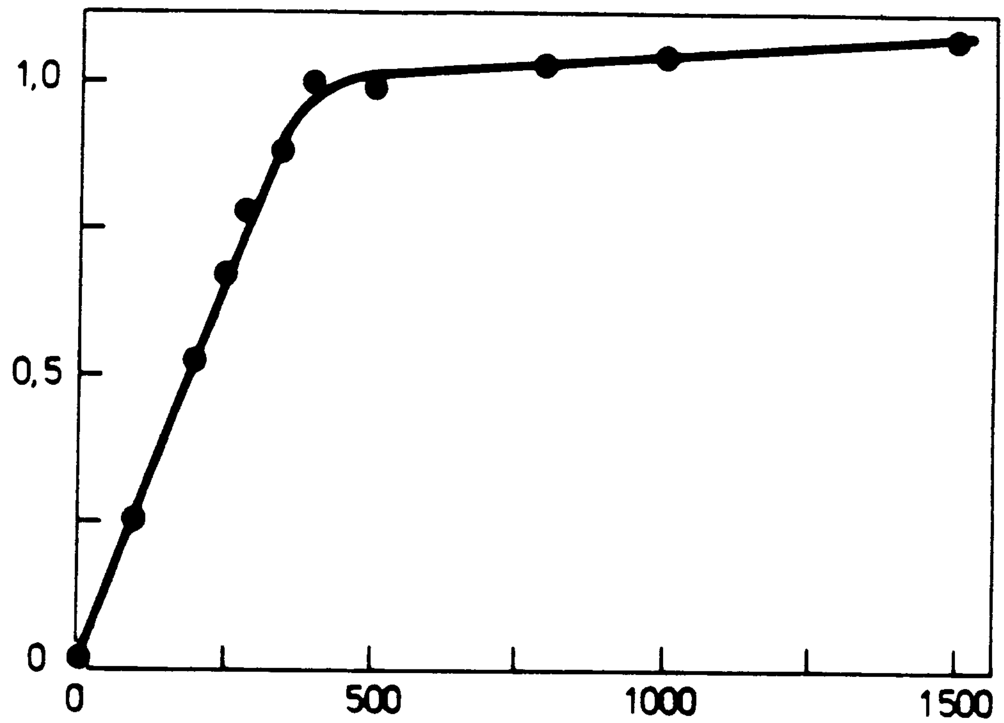


FIGURE 3